# EUROPEAN PATENT APPLICATION

(11) **EP 4 602 974 A1**
(43) Date of publication of application: **20.08.2025**
(21) Application number: 23876760.2
(22) Date of filing: 12.10.2023
(51) Int. Cl.: A44B 11/25, A44B 11/00, A61G 7/14

(54) **SNAP-FIT LOCKING DEVICE AND MEDICAL EQUIPMENT COMPRISING SAME**

(30) Priority: 14.10.2022 CN 202222702268 U
(71) Applicant: Wong, Ka Man Priscilla, KowLoon Hong Kong (HK)
(72) Inventor: WONG, Cho Kee, Hong Kong (CN); WONG YEUNG, Wai Jun Sabrina, Hong Kong (CN); WONG, Ka Man Priscilla, Hong Kong (CN)
(74) Representative: Cabinet Chaillot
(86) International application number: PCT/CN2023/124155
(87) International publication number: WO 2024/078560

(57) **Abstract**

The present disclosure provides a fastener locking device. The fastener locking device includes a locking piece and a fastener piece. A clamping hole matched with the fastener piece is formed in the locking piece. The clamping hole consists of at least two connected hole sites. One of the two connected hole sites deflects at a certain angle relative to the other of the two connected hole sites, so that an obtuse angle is formed on one side of the joint of the two connected hole sites. A bulge is arranged at a hole inner wall corresponding to the obtuse angle. The distance with the hole inner wall at the position of the bulge is smaller than the diameter of a clamping rod. A through hole is formed in a body of the locking piece and adjacent to the position of the obtuse angle. The present disclosure also provides medical equipment having the fastener locking device.

## Description

### TECHNICAL FIELD

The present disclosure relates to a connecting device, in particular to a fastener locking device and medical equipment having the fastener locking device.

### BACKGROUND

The fastener structure is widely used in various fields, mainly used for connecting and fixing two objects.

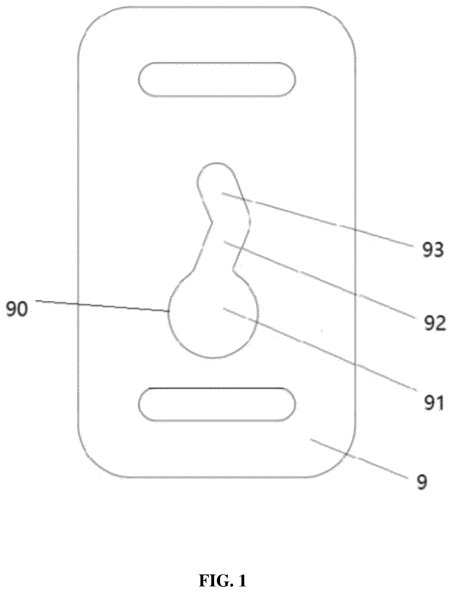

The movement and transportation of wounded persons or patients without the capacity for action has always been a very exhausting task for medical workers. In medical equipment, there is a sling pocket type device designed for moving/transporting wounded persons or patients. The device is usually a detachable fastener locking device, as shown in FIG. 1. The device as shown in FIG. 1 is provided with a locking body 9. A clamping hole 90 matched with a fastener arranged on a sling pocket is formed in the middle part of the locking body 9. The clamping hole 90 includes a penetrating section 91, a first clamping section 92 connected with the penetrating section 91, and a second clamping section 93 connected with the first clamping section 92. The first clamping section 92 is provided with two walls which are opposite and parallel to each other. The second clamping section 93 is also provided with two walls which are opposite and parallel to each other. The first clamping section 92 and the second clamping section 93 form an obtuse angle integrally. When the fastener is clamped, one end of the fastener is inserted into the penetrating section 91, and then slides into the first clamping section 92 and the second clamping section 93 in sequence. Because the distance between the two walls of the first clamping section and the second clamping section is larger than or slightly larger than the diameter of the fastener, this structure is poor in reliability and easy to loosen. When the fastener is affected by external force or unexpected circumstances occur, the fastener is easy to slide out of the clamping hole, resulting in safety accidents.

At present, there are two categories of non-woven sling pocket product series that are patented and load-tested by international third-party laboratories, namely four-fastener type and long-belt type, but the product must be used together with electric lifting machines or non-electric lifting machines.

The existing fastener has the following problems. Firstly, the existing fastener is insufficient in safety, for example, the patient shakes violently, possibly resulting in loosened fastener. Secondly, the clamping position is completely free of elasticity, and only one electric lifting machine rack is coordinated.

Moreover, cross infection becomes a global problem when patient nursing products are used. The seriousness is increased every day, resulting in extensive attention. The problem how to help medical workers and patients not be infected is solved by using disposable or short-life products, and the method is the only solution to this problem.

### SUMMARY

The purpose of the present disclosure is to provide a detachable fastener locking device with high safety so as to overcome the defects in the prior art.

The other purpose of the present disclosure is to provide medical equipment having the detachable fastener locking device in the present disclosure.

The present disclosure provides a fastener locking device. The fastener locking device includes a locking piece and a fastener piece. The fastener piece is provided with a clamping head and a clamping rod. One end of the clamping rod is fixedly connected with the clamping head, and the other end of the clamping rod is connected with a target object. A clamping hole penetrating through a body of the locking piece and matched with the fastener piece is formed in the locking piece. The clamping hole consists of at least two connected hole sites. The hole diameter of one hole site is larger than the diameter of the clamping head of the fastener piece so as to allow the clamping head to penetrate through the hole site. The hole diameter of the other hole site is smaller than the diameter of the clamping head but slightly larger than the diameter of the clamping rod for locking the fastener piece. One of the two connected hole sites being arranged to deflect at a certain angle relative to the other of the two connected hole sites so that an obtuse angle is formed on one side of the joint of the two connected hole sites. A bulge is arranged at a hole inner wall corresponding to the obtuse angle. The distance with the hole inner wall at the position of the bulge is smaller than the diameter of the clamping rod of the fastener piece, and a through hole is formed in a body of the locking piece and adjacent to the position of the obtuse angle, so that the bulge can be elastically deformed when being subjected to pressure and can be quickly restored, and the fastener piece entering one of the hole sites of the clamping hole through the bulge is not prone to slide.

In one embodiment, the clamping hole consists of three hole sites connected sequentially. A first hole site is used for accommodating the fastener piece, a second hole site, facing one side relative to the first hole site, deflects at a certain angle so that a first obtuse angle is formed on one side of the joint of the first hole site and the second hole site, and a third hole site, facing the other side relative to the second hole site, deflects at a certain angle so that a second obtuse angle is formed on one side of the joint of the second hole site and the third hole site, wherein the first obtuse angle and the second obtuse angle are opposite in directions; a bulge is arranged at a hole inner wall corresponding to each obtuse angle and the distance with the hole inner wall at the position of each bulge is smaller than the diameter of the clamping rod of the fastener piece, and a through hole is formed in a body of the locking piece and adjacent to each obtuse angle.

The second hole site is provided with two opposite side walls, the distance between the two side walls is slightly larger than the diameter of the clamping rod but smaller than the diameter of the clamping head. The third hole site is provided with two opposite side walls and a top wall, the distance between the two side walls is slightly larger than the diameter of the clamping rod but smaller than the diameter of the clamping head.

Preferably, the shape of the through hole is designed as an approximately lateral triangle, and the top of the triangle faces the position of the obtuse angle.

Preferably, the length of the through hole is arranged to extend along the directions from the obtuse angle to the two adjacent holes to reach part of side walls covering the two holes.

Preferably, a lacing hole is formed in upper and lower ends of the locking piece respectively.

The present disclosure also provides medical equipment. The medical equipment includes a hanger device, an electric lifting machine for lifting the hanger device, and at least two fastener locking devices. The fastener piece of the fastener locking device is fixed on the hanger device, and the locking piece of the fastener locking device is connected to the electric lifting machine through binding bands.

The present disclosure also provides medical equipment. The medical equipment includes a hanger device, a non-electric lifting machine or a transfer frame for lifting the hanger device, and at least two fastener locking devices. Wherein, the fastener piece of the fastener locking device is fixed on the hanger device, and the locking piece of the fastener locking device is connected to the non-electric lifting machine or the transfer frame through binding bands.

The present disclosure effectively solves the defects of the existing fastener, so that the reliability and safety of fastener connection are greatly improved.

According to the detachable fastener locking device and the medical equipment having the fastener locking device in the present disclosure, the physical load of users or medical workers can be greatly alleviated, and the manpower resource and time can also be saved, more importantly, the task can be completed under safe environment. For the medical equipment, the wounded or patients can be transferred to the next place for related nursing or treatment comfortably and safely.

### BRIEF DESCRIPTION OF THE DRAWINGS

FIG. 1 is a structural schematic diagram in the prior art.
FIG. 2 is a solid structural schematic diagram of a locking piece of a fastener locking device in the present disclosure.
FIG. 3 is a structural schematic diagram of a clamping hole as shown in FIG. 2.
FIG. 4 is a schematic diagram when a fastener locking device is in different states in the connecting process of a locking piece and a fastener piece in a using example in the present disclosure.

Reference signs: 1, locking piece; 2, fastener piece; 11, accommodating hole; 12, first retaining hole; 13, second retaining hole; 14, first bulge; 15, second bulge; 16, through hole; 17, lacing hole; 21, clamping head; 22, clamping rod; 121, 122, two side walls of the first retaining hole 12; 131, 132, two side walls of the second retaining hole 13; 161, first through hole; 162, second through hole; D1, distance between the two side walls 121, 122; D2, distance between the two side walls 131, 132; D3, distance with a hole inner wall at the position of the first bulge 14; and D4, distance with a hole inner wall at the position of the second bulge 15.

### DETAILED DESCRIPTION OF THE EMBODIMENTS

The following clearly and completely describes the technical solutions in the embodiments of the present disclosure with reference to the attached figures in the embodiments of the present disclosure.

In the description of the present disclosure, it needs to be illustrated that the indicative direction or position relations of the terms such as "top", "bottom", "inner", "outer", "upper" and "lower" are direction or position relations illustrated based on the attached figures, just for facilitating the description of the present disclosure and simplifying the description, but not for indicating or hinting that the indicated device or element must be in a specific direction and is constructed and operated in the specific direction, the terms cannot be understood as the restriction of the present disclosure. The terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of the present disclosure, the meaning of "a plurality of" means two or more unless expressly specifically defined otherwise.

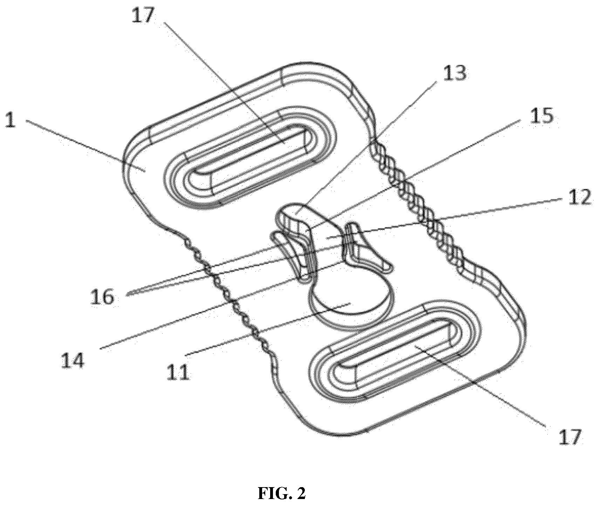

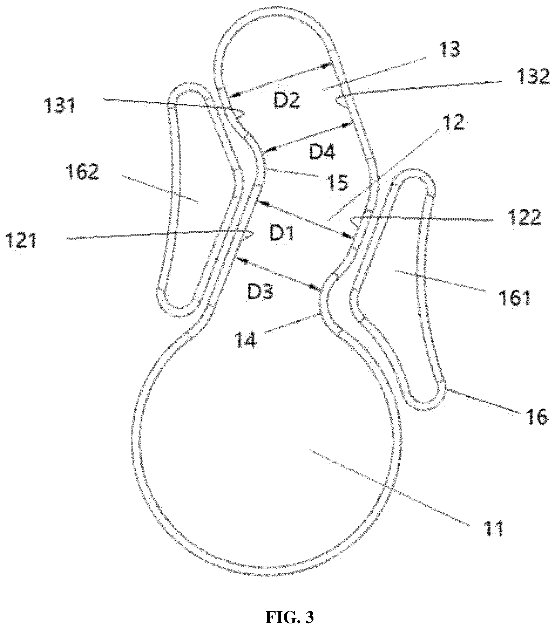

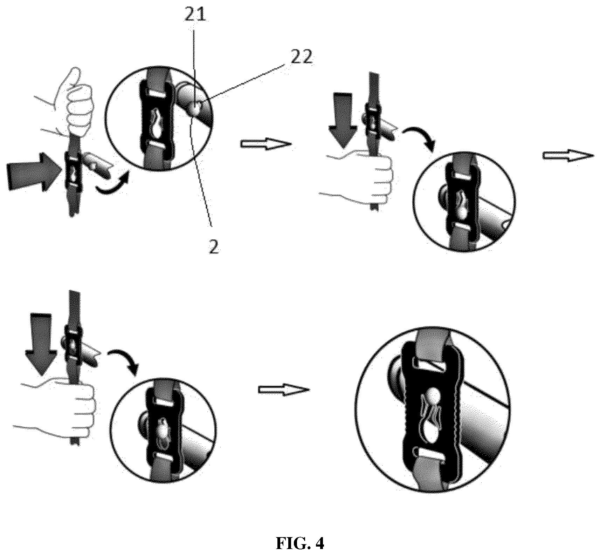

Referring to FIG. 2 to FIG. 4, FIG. 2 is a solid structural schematic diagram of a locking piece of a fastener locking device in the present disclosure. FIG. 3 is a structural schematic diagram of a clamping hole as shown in FIG. 2. FIG. 4 is a schematic diagram when a fastener locking device is in different states in the connecting process of a locking piece and a fastener piece in a using example in the present disclosure. The locking piece is made of plastic materials with certain flexibility.

The fastener locking device in the present disclosure includes a locking piece 1 and a fastener piece 2. A clamping hole penetrating through a body of the locking piece 1 is formed in the locking piece 1 and used for clamping the fastener piece 2. In the embodiment as shown in FIG. 2, the clamping hole consists of three hole sites connected sequentially, wherein a second hole site, facing one side relative to the first hole site, deflects at a certain angle so that a first obtuse angle is formed on one side of the joint of the first hole site and the second hole site; a third hole site, facing the other side relative to the second hole site, deflects at a certain angle so that a second obtuse angle is formed on one side of the joint of the second hole site and the third hole site, wherein the first obtuse angle and the second obtuse angle are opposite in directions.

The first hole site is an accommodating hole 11, the second hole site is a first retaining hole 12, and the third hole site is a second retaining hole 13. The fastener piece 2 is provided with a clamping head 21 and a clamping rod 22. One end of the clamping rod 22 is fixedly connected with the clamping head, and the other end of the clamping rod 22 is connected with a target object.

The accommodating hole 11 of the locking piece 1 is approximately round and is provided with an opening in the upper end. The hole diameter of the accommodating hole 1 is larger than the diameter of the clamping head 21 of the fastener piece 2, so that the clamping head 21 of the fastener piece 2 can freely access the accommodating hole 11. The first retaining hole 12 connected with the accommodating hole 11 is provided with two opposite side walls 121, 122. The distance D1 of the two side walls 121, 122 is slightly larger than the diameter of the clamping rod 22 of the fastener piece 2 but smaller than the diameter of the clamping head 21 of the fastener piece 2. The second retaining hole 13 connected with the first retaining hole 12 is provided with two opposite side walls 131, 132 and a top wall. The distance D2 of the two side walls 131, 132 is slightly larger than the diameter of the clamping rod 22 of the fastener piece 2 but smaller than the diameter of the clamping head 21 of the fastener piece 2.

A first bulge 14 is arranged at the position of a hole inner wall corresponding to the first obtuse angle, and the distance D3 with the hole inner wall at the position of the first bulge 14 is smaller than the distance D1 of the two side walls 121, 122 of the first retaining hole 12 and smaller than the diameter of the clamping rod 22. Similarly, a second bulge 15 is arranged at the position of a hole inner wall corresponding to the second obtuse angle, and the distance D4 with the hole inner wall at the position of the second bulge 15 is smaller than the distance D2 of the two side walls 131, 132 of the second retaining hole 13 and smaller than the diameter of the clamping rod 22.

Preferably, surfaces of the first bulge and the second bulge are arranged in arc shapes.

A through hole 16 is formed near the first obtuse angle and the second obtuse angle respectively. The through hole 16 located at the position of the first obtuse angle is a first through hole 161, and the through hole 16 located at the position of the second obtuse angle is a second through hole 162. The shapes of two through holes can be designed as approximately lateral triangles, and the top of the triangle faces the position of the obtuse angle. The two through holes 161, 162 are respectively adjacent to the first obtuse angle and the second obtuse angle. With the design, the first bulge 14 and the second bulge 15 can be elastically deformed when being subjected to external force.

Specifically, when the fastener piece enters into the accommodating hole 11 and the clamping rod 22 of the fastener piece is pushed towards the first retaining hole 12 by force, the fastener piece passes through the first bulge 14. The distance D3 with the hole inner wall at the position of the first bulge 14 is smaller than the diameter of the clamping rod 22, so that resistance is generated when the clamping rod 22 is pushed into the first retaining hole 12. However, due to the arranged first through hole 161, the first bulge 14 is elastically deformed to extend out under the action of certain applied external force until the first bulge 14 is quickly restored after the clamping rod 22 passes through the first bulge 14. After the clamping rod 22 passes through the first bulge 14 to enter into the first retaining hole 12, the first bulge 14 also plays a role in blocking the fastener piece 2 from being separated from the first retaining hole 12. In order to further lock the fastener piece 2 from being separated from the retaining hole 12, the clamping rod 22 of the fastener piece 2 can be pushed into the second retaining hole 13 again, and the clamping rod 22 needs to pass through the second bulge 15. Similarly, due to the arranged second through hole 162, the second bulge 15 is elastically deformed to extend out under the action of certain applied external force until the second bulge 15 is quickly restored after the clamping rod 22 passes through the second bulge 15. After the clamping rod 22 passes through the second bulge 15, the second bulge 15 also can block the fastener piece 2 from being separated from the second retaining hole 13.

Through the double-fastener design of the above-mentioned structure, the reliability and safety of fastener connection are greatly improved.

It should be noted that the shape and structure of the through hole in the above-mentioned embodiment are not limited to the lateral triangle, and can also be in other suitable shapes, as long as the through hole can play a role in elastically deforming the bulge to extend outside to prevent the fastener piece from being separated.

Alternatively, the length of the first through hole 161 is such arranged that the first through hole 161 extends along the two directions from the first obtuse angle to the accommodating hole and the first retaining hole to reach part of side walls covering the accommodating hole and the first retaining hole. The length of the second through hole 162 is such arranged that the second through hole 162 extends along the two directions from the second obtuse angle to the first retaining hole and the second retaining hole to reach part of side walls covering the first retaining hole and the second retaining hole. The first through hole 161 and the second through hole 162 extend such that the first through hole 161 and the second through hole 162 approximately cover the range located on two side walls of the first retaining hole 12 of the second hole site. That is to say, the respective side walls of the first bulge 14 and the second bulge 15 on the opposite sides are also adjacent to the through hole, so that when the fastener piece 2 passes through the first bulge 14 or the second bulge 15, the side wall of the first bulge 14 or the second bulge 15 on the opposite sides can also be elastically deformed to a certain degree. The fastener piece 2 passes through the first bulge 14 or the second bulge 15 and can be quickly restored. The fastener piece 2 is not prone to slide out of the retaining hole, so that the safety is greatly improved.

Alternatively, according to different applications, at least one lacing hole is formed in the locking piece for connection with binding bands. In the embodiment as shown in FIG. 2 to FIG. 4, a lacing hole 17 is formed in upper and lower ends of the locking piece respectively.

Alternatively, according to different applications, the locking piece in the present disclosure can also be designed as a single-fastener structure with the above-mentioned principle. For example, only the accommodating hole and the first retaining hole of the above-mentioned structures are included. One hole deflects at a certain angle relative to the other hole, so that an obtuse angle is formed at the joint of the two holes. At the same time, a bulge is formed on the hole inner wall corresponding to the obtuse angle on the back of the obtuse angle. The distance with the hole inner wall at the position of the bulge is smaller than the diameter of the clamping rod of the fastener piece to play a certain blocking role when the fastener piece is separated from the clamping hole. Moreover, a through hole is formed in the locking piece and adjacent to the position of the obtuse angle, so that the clamping rod is elastically deformed under the condition of applying external force when the clamping rod passes through the position of the bulge, so that the clamping rod passes through the bulge. The through hole can be of the structure like the through hole in the above-mentioned embodiment.

When the fastener piece needs to be disassembled, only external force is applied to the fastener piece relative to the fastener piece, so that the fastener piece passes through the bulges one by one and is separated from related holes of the locking piece.

In one embodiment, the present disclosure also provides medical equipment. The medical equipment includes a hanger device designed for moving/transporting wounded persons or patients without capacity for action, an electric lifting machine for lifting the hanger device, and at least two fastener locking devices. The fastener piece of the fastener locking device is fixed to the hanger device, and the locking piece of the fastener locking device is connected to the electric lifting machine through binding bands. The hanger device may be, for example, a sling pocket, a hammock, a hanger and the like.

In another embodiment, the present disclosure also provides medical equipment. The medical equipment includes a hanger device designed for moving/transporting wounded persons or patients without capacity for action, a non-electric lifting machine for lifting the hanger device, and at least two fastener locking devices. The fastener piece of the fastener locking device is fixed to the hanger device, and the locking piece is connected to the non-electric lifting machine or the transfer frame through binding bands. The hanger device may be, for example, a sling pocket, a hammock, a hanger and the like.

When the hanger device needs to be used and connected, at least two fastener locking devices are used and installed on the left and right sides of the hanger device respectively. Preferably, a plurality of fastener locking devices are installed on the left and right sides of the hanger device and on one side of the front edge of the seat of the injured person or the patient, respectively.

According to the fastener locking device, through stable combination of the locking piece and the fastener piece, the bulge in the clamping hole of the locking piece can be elastically deformed through the arrangement of the through hole, so that the clamping rod of the fastener piece is prone to pass through the bulge when certain pressure is applied to the bulge. The fastener piece cannot slide out from the clamping hole with general external force, so that the safety is greatly improved.

When the medical equipment is not used, disassembly can be completed by separating the locking piece of the fastener locking device with the fastener piece, so that the hanger device is cleaned, disinfected or destroyed to prevent cross infection and is convenient to store.

The foregoing descriptions are merely exemplary embodiments of the present disclosure, but are not intended to limit the protection scope of the present disclosure. Any modification and equivalent replacement made using the description and attached figures of the present disclosure within the spirit and principle of the present disclosure shall fall within the protection scope of the present disclosure.

## Claims

1. A fastener locking device, comprising a locking piece and a fastener piece, the fastener piece being provided with a clamping head and a clamping rod, one end of the clamping rod being fixedly connected with the clamping head, the other end of the clamping rod being connected with a target object, a clamping hole penetrating through a body of the locking piece and matched with the fastener piece being formed in the locking piece, the clamping hole consisting of at least two connected hole sites, the hole diameter of one hole site being larger than the diameter of the clamping head of the fastener piece so as to allow the clamping head to penetrate through the hole site, the hole diameter of the other hole site being smaller than the diameter of the clamping head but slightly larger than the diameter of the clamping rod for locking the fastener piece, and one of the two connected hole sites being arranged to deflect at a certain angle relative to the other of the two connected hole sites so that an obtuse angle is formed on one side of the joint of the two connected hole sites, wherein a bulge is arranged at a hole inner wall corresponding to the obtuse angle, the distance with the hole inner wall at the position of the bulge is smaller than the diameter of the clamping rod of the fastener piece, and a through hole is formed in a body of the locking piece and adjacent to the position of the obtuse angle, so that the bulge can be elastically deformed when being subjected to pressure and can be quickly restored, and the fastener piece entering one of the hole sites of the clamping hole through the bulge is not prone to slide.

2. The fastener locking device according to claim 1, wherein the clamping hole consists of three hole sites connected sequentially, wherein a first hole site is used for accommodating the fastener piece, a second hole site, facing one side relative to the first hole site, deflects at a certain angle so that a first obtuse angle is formed on one side of the joint of the first hole site and the second hole site, a third hole site, facing the other side relative to the second hole site, deflects at a certain angle so that a second obtuse angle is formed on one side of the joint of the second hole site and the third hole site, wherein the first obtuse angle and the second obtuse angle are opposite in directions; a bulge is arranged at a hole inner wall corresponding to each obtuse angle and the distance with the hole inner wall at the position of each bulge is smaller than the diameter of the clamping rod of the fastener piece, and a through hole is formed in a body of the locking piece and adjacent to each obtuse angle.

3. The fastener locking device according to claim 2, wherein the second hole site is provided with two opposite side walls, the distance between the two side walls is slightly larger than the diameter of the clamping rod but smaller than the diameter of the clamping head; the third hole site is provided with two opposite side walls and a top wall, the distance between the two side walls is slightly larger than the diameter of the clamping rod but smaller than the diameter of the clamping head.

4. The fastener locking device according to claim 1, wherein the shape of the through hole is designed as an approximately lateral triangle, and the top of the triangle faces the position of the obtuse angle.

5. The fastener locking device according to claim 2, wherein the shape of each through hole is designed as an approximately lateral triangle, and the top of the triangle faces the position of the obtuse angle.

6. The fastener locking device according to claim 4, wherein the length of the through hole is arranged to extend along the directions from the obtuse angle to the two adjacent holes to reach part of side walls covering the two holes.

7. The fastener locking device according to claim 5, wherein the length of each through hole is arranged to extend along the directions from the obtuse angle to the two adjacent holes to reach part of side walls covering the two holes.

8. The fastener locking device according to claim 1, wherein a lacing hole is formed in upper and lower ends of the locking piece respectively.

9. A medical equipment, comprising a hanger device, an electric lifting machine for lifting the hanger device, and at least two fastener locking devices according to any one of claims 1 to 8, wherein the fastener piece of the fastener locking device is fixed on the hanger device, and the locking piece of the fastener locking device is connected to the electric lifting machine through binding bands.

10. A medical equipment, comprising a hanger device, a non-electric lifting machine or a transfer frame for lifting the hanger device, and at least two fastener locking devices according to any one of claims 1 to 8, wherein the fastener piece of the fastener locking device is fixed on the hanger device, and the locking piece of the fastener locking device is connected to the non-electric lifting machine or the transfer frame through binding bands.
